(19)

**Europäisches Patentamt**

**European Patent Office**

**Office européen des brevets**

(11) **EP 3 794 201 B1**

(12) **EUROPEAN PATENT SPECIFICATION**

(45) Date of publication and mention
of the grant of the patent:
**03.01.2024 Bulletin 2024/01**

(21) Application number: **19722913.1**

(22) Date of filing: **13.05.2019**

(51) International Patent Classification (IPC):
**E06B 3/66** *(2006.01)* **B32B 17/10** *(2006.01)*

(52) Cooperative Patent Classification (CPC):
**E06B 3/6612; B32B 17/10055; B32B 17/10211;
B32B 17/10706; B32B 17/10743; B32B 17/10761;
B32B 17/1077; B32B 17/10788;** Y02A 30/249;
Y02B 80/22

(86) International application number:
**PCT/EP2019/062186**

(87) International publication number:
**WO 2019/219595 (21.11.2019 Gazette 2019/47)**

(54) **ASYMMETRICAL VACUUM-INSULATED GLAZING UNIT**

ASYMMETRISCHE VAKUUMISOLIERTE VERGLASUNGSEINHEIT

UNITÉ DE VITRAGE À ISOLATION PAR LE VIDE ASYMÉTRIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2018 EP 18172110**

(43) Date of publication of application:
**24.03.2021 Bulletin 2021/12**

(73) Proprietors:
• **AGC Glass Europe**
**1348 Louvain-La-Neuve (BE)**
• **AGC Inc.**
**Chiyoda-ku**
**Tokyo 100-8405 (JP)**
• **AGC Flat Glass North America, Inc.**
**Alpharetta, 30022-1167 (US)**
• **AGC Vidros do Brasil Ltda**
**12523-671 São Paulo, Guaratinguetá (BR)**

(72) Inventors:
• **BEN TRAD, Abderrazek**
**1200 Woluwe Saint-Lambert (BE)**
• **SCHNEIDER, Pierre**
**37370 Saint Christophe sur le Nais (FR)**
• **DECROUPET, Daniel**
**7134 Leval Trahegnies (BE)**
• **DESMEDT, Amélia**
**5190 Moustier (BE)**

(74) Representative: **AGC Glass Europe**
**Technovation Centre**
**Intellectual Property Department**
**Rue Louis Blériot 12**
**6041 Gosselies (BE)**

(56) References cited:
**WO-A1-2011/161110** **WO-A1-2017/175007**
**US-A- 5 154 953**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**1. FIELD OF THE INVENTION**

The invention relates to a vacuum-insulated glazing unit wherein the glass panes are of different thicknesses, and having thermal insulating properties provided by pyrolytic transparent conductive oxide-based coatings as selective filters of transmitted wavelengths.

**2. BACKGROUND OF THE INVENTION**

Vacuum-insulated glazing units are recommended because of their high performance thermal insulation. A vacuum-insulated glazing unit is typically composed of at least two glass panes separated by an internal space in which a vacuum has been generated. In general, in order to achieve a high-performance thermal insulation (Thermal transmittance, U, being U<1.2 W/m$^2$K) the absolute pressure inside the glazing unit is typically 0.1mbar or less and generally at least one of the two glass pane is covered with a low emissivity layer. To obtain such a pressure inside the glazing unit, a hermetically bonding seal is placed on the periphery of the two glass panes and the vacuum is generated inside the glazing unit by virtue of a pump. To prevent the glazing unit from caving in under atmospheric pressure (due to the pressure difference between the interior and exterior of the glazing unit), discrete spacers are placed between the two glass panes.

Recent vacuum-insulated glazing units have been configured asymmetrically such that one glass pane is thicker than the other glass pane for improved mechanical performances. JP2001316137 indeed teaches to configure an asymmetric vacuum-insulated glazing unit wherein the inner glass pane disposed on the indoor side is thicker than the outer glass pane, to avoid deformation and/or distortion occurring even if the glass panes are hit by strong sunlight. JP2001316138 teaches the opposite VIG construction wherein the outer glass pane disposed on the outdoor side is thicker than the inner glass pane, for improved chock resistance and acoustic performances.

US2015/0354264 teaches a reduced pressure double glazed glass panel with a low-E film with an emissivity of 0.067 or less on the second glass surface of the outside glass, i.e. the second glass surface is the glass surface disposed to face the gap portion, to provide sufficient heat insulating and heat shielding properties. The Low-E film is a stack of lower dielectric layer, metal layer, sacrificial layer and upper dielectric layer, formed by reactive sputtering. WO2016/063007discloses a vacuum-insulated glazing unit with a low emissivity coating on the exterior facing surface for anti-condensation properties without the need to overcoat the low emissivity coating. EP 1 630 344 teaches to provide low emissivity coating of less than 0.2 emissivity on the interior surfaces of the glass panes of vacuum-insulated glazing unit. Examples of convenient low emissivity coating are sputtered coating stacks of the type dielectric/silver/sacrificial/dielectric or are chemical vapour deposition coatings based on doped tin oxide layers.

It has been found that asymmetric vacuum-insulated glazing units demonstrate superior mechanical resistance against deformation and/or distortion that occur when the glass panes undergo severe temperature difference between interior and exterior environments. Therefore, it is critical to maintain such mechanical resistance against therma l induced deformation. None of the art addresses the technical problem of maintaining the mechanical performance of asymmetric vacuum-insulated glazing units over a long period of time and providing thermal insulating properties, in a cost effective and efficient manner.

**3. SUMMARY OF THE INVENTION**

The present invention relates to a vacuum insulating glazing unit (10) extending along a plane, P, defined by a longitudinal axis, X, and a vertical axis, Z, and comprising:

a) a first glass pane having an inner pane face (11) and an outer pane face (12) and having a thickness Z1, and a second glass pane (2) having an inner pane face (21) and an outer pane face (22) and having a thickness, Z2. The thicknesses are measured in the direction normal to the plane, P, wherein Z1 is greater than Z2 (Z1>Z2). The thickness ratio, Z1/Z2, of the thickness of the first glass pane, Z1, to the thickness of the second glass pane, Z2, is equal to or greater than 1.10 (Z1 / Z2 ≥ 1.10).
b) a set of discrete spacers positioned between the first and second glass panes, maintaining a distance between the first and the second glass panes.
c) a hermetically bonding seal sealing the distance between the first and second glass panes over a perimeter thereof.
d) an internal volume, V, defined by the first and second glass panes and the set of discrete spacers and closed by the hermetically bonding seal and wherein there is a vacuum of absolute pressure of less than 0.1 mbar.

The inner pane faces of the first and second glass panes face the internal volume, V. Within the vacuum insulating glazing unit, at least one of the inner pane faces of the first and second glass panes, is provided with a pyrolytic transparent conductive oxide-based coating.

The present invention further relates to a partition separating an exterior space from an interior space Said partition comprises an opening being closed by a vacuum insulating glazing unit according to the present invention, preferably wherein the first glass pane is facing the exterior space. The present invention further relates to the use of a vacuum insulated glazing unit according to the present invention to close the opening of such partition.

Other aspects and advantages of the embodiments will become apparent from the following detailed description taken in conjunction with the accompanying drawings which illustrate, by way of example, the principles of the described embodiments.

## 4. BRIEF DESCRIPTION OF THE DRAWINGS

**Figure 1** shows a cross sectional view of an asymmetric vacuum-insulated glazing unit according to one embodiment of the present invention.

**Figure 2** shows a cross sectional view of an asymmetric vacuum-insulated glazing unit according to one embodiment of the present invention.

**Figure 3** shows a cross sectional view of an asymmetric vacuum-insulated glazing unit according to one embodiment of the present invention.

**Figure 4 shows a cross** sectional view of an asymmetric vacuum-insulated glazing unit according to one embodiment of the present invention

## 5. DETAILED DESCRIPTION OF THE INVENTION

It is an object of the present invention to provide a vacuum-insulated glazing unit (hereinafter referred as VIG) which demonstrates high performance against deformation and/or distortion when exposed to high temperature difference between the exterior and interior environment, provides thermal insulating properties, is highly sustainable over its life time and can be produced in an efficient and cost effective manner.

It has been surprisingly found that it is critical to reduce the amount of energy dissipated to the outside and therefore to carefully select the appropriate low emissivity layer to be added to the glass panes without impairing the other properties. Moreover, the asymmetric VIG must demonstrate light transmission as high as possible and an acceptable coloration in reflection. Indeed, the asymmetric vacuum-insulated glazing unit should remain as neutral as possible in reflection and certainly exhibit no purple coloration.

The invention relates to a vacuum-insulated glazing unit typically comprising a first glass pane and a second glass pane that are associated together by way of set of discrete spacers that holds said panes a certain distance apart, typically in the range of between 50 $\mu$m and 1000 $\mu$m, preferably between 50 $\mu$m and 500 $\mu$m and more preferably between 50 $\mu$m and 150 $\mu$m, and between said glass panes, an internal space comprising at least one first cavity, in which cavity there is an absolute vacuum less than 0.1 mbar, said space being closed with a peripheral hermetically bonding seal placed on the periphery of the glass panes around said internal space.

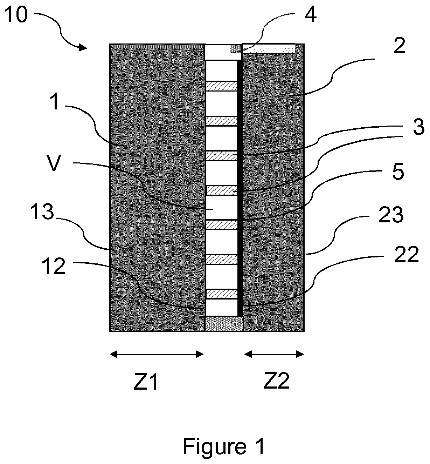

As illustrated in **Figures 1 to 4**, the vacuum insulating glazing unit (10) extending along a plane, P, defined by a longitudinal axis, X, and a vertical axis, Z. The VIG of the present invention comprises:

a) a first glass pane (1) having an inner pane face (12) and an outer pane face (13) and having a thickness Z1, and a second glass pane (2) having an inner pane face (22) and an outer pane face (23) and having a thickness, Z2. The thicknesses are measured in the direction normal to the plane, P.
b) a set of discrete spacers (3) positioned between the first and second glass panes and maintaining a distance between the first and the second glass panes;
c) a hermetically bonding seal (4) sealing the distance between the first and second glass panes over a perimeter thereof;
d) an internal volume, V, defined by the first and second glass panes and the set of discrete spacers and closed by the hermetically bonding seal and wherein there is a vacuum of absolute pressure of less than 0.1 mbar.

The vacuum-insulated glazing unit of the present invention will be hereinafter referred to as the "asymmetric VIG".
Within the present invention, Z1 is greater than Z2 (Z1>Z2) to provide a thickness ratio, Z1/Z2, of the thickness of the first glass pane, Z1, to the thickness of the second glass pane, Z2, is equal to or greater than 1.10 (Z1 / Z2 ≥ 1.10). In a preferred embodiment, the thickness ratio, Z1/Z2, is equal to or greater than 1.30 (Z1/Z2≥1.30), preferably is equal to or greater than 1.55 (Z1/Z2≥1.55), more preferably is comprised between 1.60 and 6.00 (1.60 ≤ Z1/Z2 ≤ 6.00), ideally is comprised between 2.00 and 4.00 (2.00 ≤ Z1/Z2 ≤ 4.00). It has been surprisingly found that the higher the Z1/Z2 ratio, the better it is for mechanical resistance. Indeed, it has been found that deformation and/or distortion of the glass panes may be limited even if subjected to severe temperature difference between interior and exterior environments.

Within the VIG, the first glass pane has an inner pane face (12) and an outer pane face (13). The second glass pane has an inner pane face (22) and an outer pane face (23). The inner pane faces are facing the internal volume, V, of the asymmetric VIG. The outer pane faces are facing the exterior of the VIG.

## ASYMMETRIC VIG WITH AT LEAST ONE PYROLITIC TCO-BASED COATING

As Illustrated in **Figures 1 to 4,** at least one of the inner pane faces (12, 22) of the first and second glass panes (1, 2) of the asymmetric VIG of the present invention is provided with a pyrolytic transparent conductive oxide-based coating (hereinafter referred to as "pyrolytic TCO-based coating").

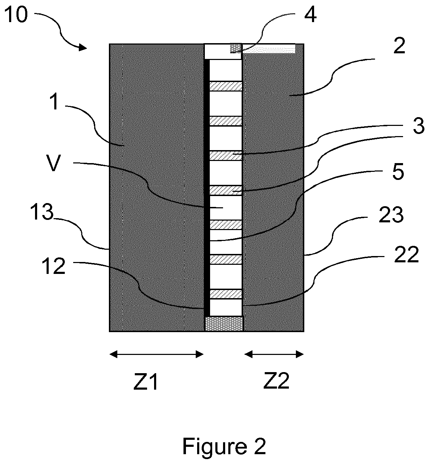

In **Figure 1,** the inner pane face of the first glass pane (12) is provided with the pyrolytic TCO-based coating. In **Figure 2,** the inner pane face of the second glass pane (22) is provided with the pyrolytic TCO-based coating.

Two main types of low emissivity coating are known in the art and can be added to surfaces of the glass panes of insulated glazing units or vacuum-insulated glazing unit. These are: (1) layers obtained by gas pyrolysis, mainly based on oxides and (2) systems of layers that comprise one or more metal layers that selectively reflect infrared radiation. Metal layers form typically part of a set of layers comprising additional protective dielectric layers to control the selectivity of the filters formed. These sets are produced essentially by sputtering techniques.

The choice of the types of layers used in vacuum-insulating glazing units depends on multiple criteria. Low emissivity layers deposited by sputtering techniques have higher emissivity performance than pyrolytic layers and therefore are preferably used in insulated glazing. However, these layers deposited by sputtering are fragile, known to be soft and must consequently be protected.

The present invention is based on the surprising finding that for a cost-effective production process and to provide sustainable asymmetric VIGs, it is preferred to use the less performing pyrolytic low emissivity coating than the highly performing sputtered low emissivity coating. Indeed, the pyrolytic TCO-based coatings have the advantage of being obtained directly on the glass production lines. This avoids a costly process step of cleaning the glass surface before the addition of any additional coating. Furthermore, the pyrolytic TCO-based coatings are "hard" and hence give superior resistance to mechanical and/or chemical stresses and therefore are more appropriate and more resistant to the processing of the vacuum-based insulated glazing production.

The production process of vacuum based insulated glazing includes indeed two critical steps of cleaning and outgassing. If such steps are not processed adequately, it can happen that dissolved gas and/or impurities escape from the glass pane and/or coating over the lifetime of the glazing and therefore damage the vacuum created within the internal volume of the vacuum-insulated glazing unit. The vacuum loss decreases significantly or even drastically the thermal insulation properties and therefore the thermal insulation performances of the asymmetric VIG.

It is therefore critical to eliminate any gas dissolved and/or impurities within the glass and to clean thoroughly the glass panes. The quality of final vacuum in the window depends critically on the level of cleanliness achieved at this stage. The cleaning operation may involve simply washing in water, detergent or solvent. Ultrasonic cleaning methods, or acid etching techniques may also be employed. Following cleaning, the glass is rinsed and dried. As the pyrolytic TCO-based coatings are "hard" and mechanically and/or chemically more resistant than magnetron sputtered coatings, abrasive techniques may be used for improving the cleaning thoroughly the glass panes without damaging significantly the glass surface.

It has been found that the pyrolytic TCO-based coating added to one or both inner pane faces of the glass panes of the asymmetric VIG of the present invention, maintains its superior mechanical resistance to deformation and/or distortion while providing adequate colouring of the VIG. Furthermore, by specifically selecting the less performing pyrolytic TCO-based coating, it allows to avoid the complexity and cost of the additional cleaning step required with the addition of coating by sputtering techniques. It provides as well a more robust surface for the cleaning step before the production of the VIG and thereby enhance the maintenance of the vacuum and the sustainability of the superior mechanical performances of asymmetric VIG. Furthermore, deformation and/or distortion that occur when the glass panes undergo severe temperature difference between interior and exterior environments may lead to displacements of the discrete spacers positioned on the coatings provided on the inner pane faces (12, 22) of the glass panes. These displacements may lead to scratches on the coatings and decreases the thermal performances of the vacuum insulating glazing unit. By specifically selecting pyrolytic TCO-based coatings being harder and less sensitive to scratches, the decrease of the thermal performances of the asymmetric VIG may be prevented.

## DESCRIPTION OF PYROLITIC TCO-BASED COATING

Suitable pyrolytic transparent conductive oxide-based coatings (hereinafter referred to as pyrolytic TCO-based coating) to be added to the glass pane faces of the asymmetric VIG of the present invention are typically tin oxide-based or niobium doped titanium oxide coatings.

In a preferred embodiment for better emissivity performances, the pyrolytic-TCO-based coating comprises a layer of doped tin oxide. In said preferred embodiment, the pyrolytic TCO-based coatings comprises a layer of tin oxide doped with fluorine ($SnO_2$:F) or with antimony ($SnO_2$:Sb), preferably doped at a level of 0.5 atomic% to 4 atomic% of fluorine (F) or antimony (Sb), more preferably doped at a level of 0.5 atomic% to 2 atomic% of fluorine.

It is preferred that the pyrolytic TCO-based coating has a certain thickness to guarantee selective action on infrared rays while allowing a good neutrality of colour in reflection. Therefore, in a preferred embodiment, the pyrolytic TCO-based coating has a thickness of at least 100 nm. However the thickness must be carefully adapted since the colour neutrality is only at its best with discrete thicknesses that can vary as a function of the precise nature of the composition of these layers.

According to an embodiment of the present invention, the pyrolytic TCO-based coating has a thickness, $Zc$, measured in the direction normal to the plane, P, in the range from 100 nm to 800 nm (100 nm $\leq Zc \leq$ 800 nm). In particular, the pyrolytic TCO-based coating has a thickness in the range from 200 nm to 600 nm (200 nm $\leq Zc \leq$ 600 nm). In another particular embodiment the pyrolytic TCO-based coating has a thickness in the range from 250 nm to 500 nm (250 nm $\leq Zc \leq$ 500 nm).

In particular, to improve the neutrality of the colors in reflection and benefit from high light transmission, it is preferred to combine the pyrolytic TCO-based coating that selectively filters infrared rays, with an iridescence suppressing film positioned below said pyrolytic TCO-based coating. This iridescence film improves in particular the neutrality of reflected and transmitted colors and the dependence of these colors on the angle of observation. The iridescence suppressing film may comprise at least one layer having an intermediate refractive index, positioned below said pyrolytic TCO-based coating. By intermediate, it is meant a refractive index between the refractive index of the glass pane and the refractive index of the pyrolytic TCO-based coating. Traditional iridescence suppressing films comprise mixed oxides of tin and silicon, $SnSi_xO_y$, or a silicon oxy-carbide, $SiO_xC_y$. These iridescence suppressing films' stoichiometries are adapted to achieve the desired intermediate refractive index. Also well-known are double layer iridescence suppressing films comprising a first layer closer to the glass of higher refractive index, usually based on tin oxide or titanium oxide, followed by a layer of lower refractive index, usually based on silicon oxide. These single layer or double layer films are also produced by pyrolysis directly onto the glass ribbon in float installations, preferably inside of the tin bath and/or at the outlet thereof, before the deposition of the pyrolytic TCO-based coating. Additional layers may also be deposited on top of the pyrolytic TCO-based coating in order to modify its reflectance and/or solar factor. It is known that $SiO_2$ based coatings may be used for such a purpose

Regarding the relative positions of layers, the terms "above" and "below" in the present description mean that the layer which is "above" another layer is positioned in the sequence of layers starting from the glass pane further away from the glass and that the layer which is "below" another layer is positioned in the sequence of layers starting from the glass pane closer to the glass pane.

Therefore, according to a preferred embodiment of the present invention, the pyrolytic TCO-based coating may further comprise between the at least one of the inner pane faces (12 and/or 22) of the first and second glass panes (1, 2) and said pyrolytic TCO-based coating, an iridescence suppressing film. In particular, the iridescence suppressing film comprises at least one layer having a refractive index at a wavelength of 550nm of between 1.7 and 2.5. Preferably, such layer is selected from the group consisting of titanium oxide comprising layer, tin oxide comprising layer, mixed layer of silicon oxide and tin oxide, silicon oxycarbide and/or titanium oxide. In another preferred embodiment, the iridescence suppressing film comprises at least one layer having a refractive index at a wavelength of 550nm of between 1.4 and 1.68 . Preferably, said layer comprises silicon oxide or tin oxide that can be further doped with aluminium, boron or phosphorous or silicon oxycarbide.

According to a preferred embodiment of the present invention, the pyrolytic TCO-based coating comprises between the at least one of the inner pane faces (12 and/or 22) of the first and second glass panes (1, 2) and said pyrolytic TCO-based coating, a single iridescence suppressing film of silicon oxycarbide having a refractive index at a wavelength of 550 nm in the range from 1.6 to 1.8, preferably between 1.65 and 1.75 and having a thickness comprised between 40 and 180 nm, preferably between 50 and 100 and a TCO layer of fluorine doped tin oxide having a thickness comprised between 150 and 800 nm. In another preferred embodiment, the TCO-based coating comprises between the at least one of the inner pane faces (12 and/or 22) of the first and second glass panes (1, 2) and said pyrolytic TCO-based coating, a single iridescence suppressing layer of silicon oxycarbide having a thickness in the range from 50 to 120 nm and a fluorine doped tin oxide layer thickness in the range from 150 to 350 nm. In an alternate embodiment, the TCO-based coating comprises between the at least one of the inner pane faces (12 and/or 22) of the first and second glass panes (1, 2) and said pyrolytic TCO-based coating, a single iridescence suppressing layer of silicon oxycarbide having a thickness in the range from 55 to 95 nm and a fluorine doped tin oxide layer thickness in the range from 455 to 800 nm.

In a preferred embodiment, the pyrolytic TCO-based coating comprises between the at least one of the inner pane faces (12 and/or 22) of the first and second glass panes (1, 2) and said pyrolytic TCO-based coating, a combination of one or more iridescence suppressing film comprising at least one layer having a refractive index at a wavelength of 550nm of between 1.7 and 2.5 with one or more of iridescence suppressing film comprising at least one layer having a refractive index at a wavelength of 550nm of between 1.4 and 1.68. In a particular embodiment of the present invention, the iridescence suppressing film comprises between the at least one of the inner pane faces (12 and/or 22) of the first and second glass panes (1, 2) and said pyrolytic TCO-based coating, a first layer having a refractive index at a wavelength of 550nm of between 1.7 and 2.5 and a second layer having a refractive index at a wavelength of 550 nm of between 1.4 and 1.68. In particular, the first layer is chosen from a titanium oxide comprising layer, a tin oxide comprising layer, a mixed layer of silicon oxide and tin oxide or titanium oxide, or a layer of silicon oxycarbide (SiOxCy) and the second layer comprises, or essentially consists of silicon oxide.

The thicknesses of the one or more layers in the iridescence suppressing film are chosen so as to make the colour in reflection of the pyrolytic TCO-based coating when provided on glass pane as neutral as possible, with CIELAB colour coordinates a* and b* as close as possible to 0, also when viewed from an angle. In particular, when the iridescence supressing film comprises, a first layer having a refractive index at a wavelength of 550nm of between 1.7 and 2.5 and a second layer having a refractive index at a wavelength of 550 nm of between 1.4 and 1.68, the thicknesses of the first and/or second layers in the iridescence suppressing film ranges from 10 to 180 nm, preferably from 10 to 100 nm, more preferably from 15 to 50 nm.

In exemplary embodiment of the present invention, the TCO-based insulating coatings may for instance comprise the following sequence of layers starting from the glass pane: SnO2 (30 nm) / SiO2 (30 nm) / SnO2:F (320-370 nm).

Additional layers may be deposited above the pyrolytic TCO-based coating for improving transmittance, in particular energetically transmittance, such as a silicon oxide comprising layer. Using a layer of silicon oxide as the topmost layer in the TCO-based coating interestingly reduces the reflection of visible light of the glazing. When present, the thickness of the topmost silicon oxide layer may be in the range of from 40 to 90 nm.

In exemplary embodiments, the pyrolytic TCO-based coating includes the following layers in succession, from the glass pane:

   (i) glass/silicon oxide or oxycarbide/SnO2:F/ optionally silicon oxide, additional intermediate layers possibly being inserted between these various layers, or
   (ii) glass/tin oxide/silicon oxide/SnO2:F/ optionally silicon oxide.

The assembly of pyrolytic layers is traditionally obtained in float glass production by adding precursors of these layers directly to the ribbon of glass during the float process at high temperature (500°C to 800°C). The pyrolytic layers, in particular based on tin oxide, obtained at the outlet of the pyrolysis unit are somewhat rough and then present surface irregularities. To smooth out these surface irregularities, it is known to perform a polishing operation on these layers. Conducting such polishing enables to reduce the extent of this roughness. Polishing the pyrolytic TCO-based coating improves the quality of the cleaning step performed during the production process of the VIG. The quality of final vacuum in the VIG depends critically on the level of cleanliness of the inner face of the glass panes. Therefore, it has been found that it is highly advantageous to used polished pyrolytic TCO-based coatings on the inner pane face(s) (12, 22) of the first and/or second glass panes of the asymmetric VIG of the present invention since polished pyrolytic TCO-based coatings provide higher quality cleaning of the inner pane faces of the glass panes and hence provide higher quality of final vacuum within the asymmetric VIG.

In a particularly useful embodiment, the pyrolytic TCO-based coatings are deposited by chemical vapour deposition and subsequently polished so as to reduce their surface roughness to an average roughness Rq of less than 12 nm, even less than 7 nm, or even less than 5 nm. Preferably, the pyrolytic TCO-based coating comprises a layer of doped tin oxide-based having an average roughness Rq of less than 12 nm, even less than 7 nm, and even less than 5 nm were found to be more suitable for improving the cleaning step performed during the production process.

In a preferred embodiment, the pyrolytic TCO-based coatings comprises a layer of tin oxide doped with fluorine (SnO2:F) or with antimony (SnO2:Sb), preferably doped at a level of 0.5 atomic% to 4 atomic% of fluorine (F) or antimony (Sb), more preferably doped at a level of 0.5 atomic% to 2 atomic% of fluorine (F) or antimony (Sb). In a further preferred embodiment for improving the cleaning step performed during the production process of the vacuum insulating lazing unit, said layer of doped tin oxide with fluorine (SnO2:F) or antimony (SnO2:Sb), has a roughness Rq of less than 12 nm (Rq < 12 nm), preferably less than 7 nm (Rq < 7 nm), more preferably less than 5 nm (Rq < 5 nm).

The roughness value Rq is the root mean square roughness of the differences of the height z relative to the average height z⁻. The height profile is evaluated by atomic force microscopy (AFM) on an area of 10 x 10 $\mu$m$^2$ in N = 512 lines and M = 512 measurement points according to the following formula:

$$R_q = \sqrt{\frac{1}{MN} \sum_{x=1}^{N} \sum_{y=1}^{M} \left( z(x,y) - \bar{z}(N,M) \right)^2}$$

The pyrolytic TCO-based coating selected for the present invention are such that when provided on a clear glass pane having a thickness of 4 mm, then the emissivity, E, of such coated clear glass pane is at most 0.20 (E ≤ 0.20), preferably at most 0.15 (E ≤ 0.15), more preferably at most 0.12 (E ≤ 0.12). The term "clear glass" refers herein to glass compositions having a greenish tint resulting from low iron content. For industrial soda-lime glass, low-iron glasses are characterized by a total iron content, expressed as Fe2O3total, below approximately 0.15wt%, generally below 600ppm.

## ASYMMETRIC VIG WITH MULTIPLE PYROLITIC TCO-BASED COATINGS

At least one of the inner pane faces (12 and/or 22) of the first and second glass panes of the asymmetric VIG of the present invention is provided with a pyrolytic TCO-based coating. In one embodiment of the present invention, at least one of the outer pane faces (13 and/or 23) of the first and second glass panes are further provided with a pyrolytic TCO-based coating. In a preferred embodiment of the present invention, at least two of the inner pane faces (12 and/or 22) and outer pane faces (13 and/or 23) of the first and second glass panes are provided with a pyrolytic TCO-based coating. In one embodiment thereof, both inner panes faces (12 and 22) are provided with the pyrolytic TCO-based coating. In another embodiment thereof, one inner pane faces (12 or 22) of the first or second glass panes and one outer pane faces (13 or 23) of the first or second glass panes, are provided with the pyrolytic TCO-based coating. To achieve higher emissivity performance, said pyrolytic TCO-based coatings may be of the same or different compositions.

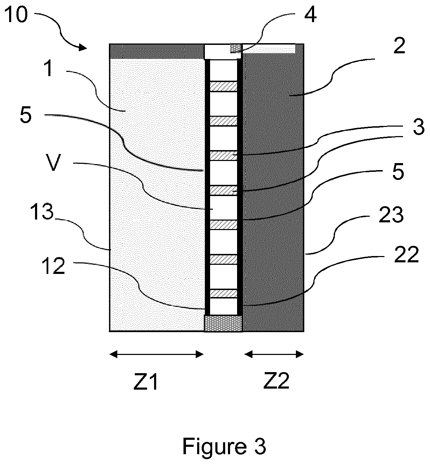

In a preferred embodiment as shown in **Figure 3**, both inner pane faces (12, 22) of the first and second glass panes are provided with a pyrolytic TCO-based coating. In such preferred embodiment wherein both the inner pane faces (12, 22) are provided with a pyrolytic TCO-based coating, the emissivity performance of the asymmetric VIG is improved. Furthermore, the thorough cleaning of the inner pane faces of the glass panes can be highly improved without damaging the surface and therefore the quality of final vacuum within the asymmetric VIG is correspondingly improved.

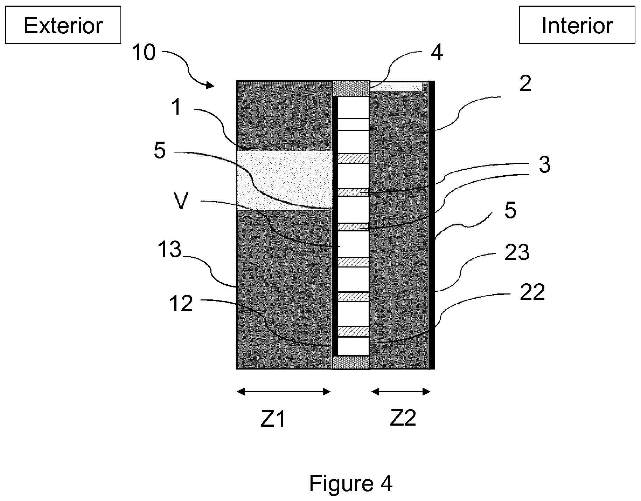

In a another preferred embodiment, the pyrolytic TCO-based coatings may be provided on at least one of the inner pane faces (12 and/or 22) of the first and second glass panes and on at least one of the outer pane faces (13 or 23) of the first and second glass panes. In another preferred embodiment, the inner pane face (12) of the first glass pane is provided with a pyrolytic TCO-based coating and at least one of the outer pane faces (13 or 23) of the first and second glass panes is provided with a pyrolytic TCO-based coating. In particular, the inner pane face (12) of the first glass pane is provided with a pyrolytic TCO-based coating and the outer pane face (23) of the second glass pane is provided with a pyrolytic TCO-based coating, as illustrated in **Figure 4**. In such preferred embodiment, the asymmetric VIG of the present invention demonstrates further improved emissivity.

In another preferred embodiment, both inner pane faces (12 and 22) of the first and second glass panes and at least one of the outer pane faces (13 or 23) of the first and second glass panes is provided with a pyrolytic TCO-based coating. In such preferred embodiment, improved emissivity performance and/or anti-condensation properties can be obtained depending on the placement of the asymmetric VIG respective to the environment.

In another preferred embodiment, both inner pane faces (12 and 22) and both outer pane faces (13 and 23) of both glass panes are provided with a pyrolytic transparent conductive oxide-based coating. In such preferred embodiment, high emissivity performance and high anti-condensation properties of such asymmetric VIG can be obtained. Furthermore, the thorough cleaning of the inner pane faces of the glass panes can be highly improved without damaging the surface and therefore the quality of final vacuum within the asymmetric VIG is correspondingly improved.

The asymmetric VIG of the present invention is typically used to close an opening within a partition such as in general-purpose glazing units, a build wall, automotive glazing units or architectural glazing units, appliances... This partition separates an exterior space from an interior space, typically the exterior space from the interior space of a building. Preferably, the asymmetric VIG of the present invention will close an opening of a partition separating an exterior space from an interior space, whereby the first glass pane of the asymmetric of the VIG is facing the exterior space. Indeed, it had been found that the mechanical performances of the asymmetric VIG of the present invention are superior when the first glass pane is facing the exterior space as deformation and/or distortion are limited even if the glass panes surfaces are faced severe temperature difference between interior and exterior environments.

In the preferred embodiment wherein at least one of the outer pane faces (13 and/or 23) of the first and second glass panes are further provided with a pyrolytic TCO-based coating, anti-condensation properties and/or improved emissivity performance can be obtained depending on the placement of the asymmetric VIG respective to the environment.

(i) For an asymmetric VIG wherein both inner glass pane faces (12, 22) are provided with a pyrolytic TCO-based coating and wherein the outer face of the first glass pane (13) or second glass pane (23), preferably of the second glass pane (23), is provided with the pyrolyticTCO-based coating, and when such asymmetric VIG is positioned to close the opening of a partition whereby the outer face of the first glass pane (13) or second glass pane (23), preferably of the second glass pane (23) faces the interior environment, then the emissivity performance of such asymmetric VIG may reach similar emissivity performances obtained with the higher performing layers deposited by cathodic sputtering.

(ii) It has been found that when the asymmetric VIG is positioned to close the opening of a partition whereby the outer pane face of the first glass pane (13) or second glass pane (23), preferably of the first glass pane (13), faces the exterior environment, it may become fogged due to condensation. Indeed, the glass pane facing the exterior space emits of heat and in case of high relative external atmospheric humidity, this causes fogging i.e. condensation or frost deposition, as a result of the temperature of the glass pane facing the exterior space falling below the dew point. If limited heat flows from the internal volume, V, of the asymmetric VIG to the glass pane facing the exterior environment, then the temperature of such glass pane does not increase and no fogging occurs. It has been found that wherein the asymmetric VIG is configured such as the outer pane face of the glass pane facing the exterior environment, preferably of the first glass pane, is provided with the pyrolyticTCO-based coating as per invention, then the formation of condensation on the outer pane face is significantly reduced.

The present invention further relates to the use of an asymmetric vacuum insulated glazing unit as defined above, to close the opening of a partition separating an exterior space from an interior space, and preferably wherein the first glass pane is facing the exterior space.

In some embodiment of the present invention and for achieving high performance thermal insulation while providing high solar control performances of the asymmetric vacuum insulated glazing unit according the present invention, further coatings can be applied on the inner pane faces (12 and/or 22) of the first glass pane and/or on the outer pane faces (13 and/or 23) of the second glass panes, such as solar control coatings, anti-reflective coatings.

## STRUCTURE VIG

In one embodiment of the present invention, the thickness of the first glass pane, Z1, of the asymmetric VIG, may be equal to or greater than 6 mm (Z1 $\geq$ 6 mm), preferably may be equal to or greater to 7 mm, (Z1 $\geq$ 7 mm), preferably equal to or greater to 8 mm, (Z1 $\geq$ 8 mm). Typically, the thickness of the first glass pane, Z1, will be not more than 12 mm, preferably no more than 10 mm. In another embodiment, the thickness of the second glass pane, Z2, of the asymmetric VIG, may typically be equal to or greater than 1 mm (Z2 $\geq$ 1mm), preferably may be equal to or greater to 2 mm, (Z2 $\geq$ 2 mm), preferably equal to or greater to 3 mm, (Z2 $\geq$ 3 mm). Typically, the thickness of the second glass pane, Z2, will be not more than 10 mm, preferably no more than 8 mm. However, in order to improve the mechanical resistance of the asymmetric VIG of the present invention, it is preferred to keep the thickness of the second pane, Z2, to a minimum.

## MULTIPLE INSULATING GLAZING

In another embodiment of the present invention, the present invention also applies to any type of glazing unit comprising glass panes (two, three or more) bounding insulating or non-insulating internal spaces (also called multiple glazing units) provided that a partial vacuum is generated in at least one of these internal spaces. Therefore, in one embodiment, to improve the mechanical performances of the asymmetric VIG of the present invention, a third additional glass pane can be coupled to at least one of the outer pane faces (13 and/or 23) of the first and second glass pane along the periphery of the VIG via a peripheral spacer bar creating in insulating cavity sealed by a peripheral edge seal. Said peripheral spacer bar maintained a certain distance between the third glass pane and the at least one of the outer pane face one of the first and second glass panes. Typically said spacer bar comprises a dessicant and has typically a thickness comprised between 6 mm to 20 mm, preferably 9 to 15mm. In general, said second internal volume is filled with a predetermined gas selected from the group consisting of air, dry air, argon (Ar), krypton (Kr), xenon (Xe), sulfur hexafluoride (SF6), carbon dioxide or a combination thereof. Said predetermined gas are effective for preventing heat transfer and/or may be used to reduce sound transmission.

Wherein the asymmetric VIG is used to close an opening within a partition separating the interior and exterior spaces, it is preferred to the third glass pane faces the exterior space. It is further preferred that the third glass pane is provided with at least a pyrolytic TCO-based coating on at least one of its surface together with a pyrolytic TCO-based coating provided on at least one of the inner pane faces (12 and/or 22) of the first and second glass panes. Such specific glazing unit provides higher mechanical performance while improving the emissivity performances and/or reducing the formation of condensation. In particular and for safety reasons, the outer face of the second glass pane (23) facing the interior environment may be additionally laminated to at least one glass sheet by at least one polymer interlayer forming a laminated assembly.

## LAMINATED ASSEMBLY

In one embodiment of the present invention, at least one of the outer pane faces (13 and/or 23) of the first and the second glass pane may be further laminated to at least one glass sheet by at least one polymer interlayer forming a laminated assembly, for safety and security reasons. Therefore, in the preferred embodiment wherein the asymmetric VIG is placed to close an opening within a partition, whereby the first glass pane is facing the exterior environment, the first outer pane face (13) may be provided with a pyrolytic TCO-based coating for reducing the formation of condensation on the glass surface, a pyrolytic TCO-based coating is provided on at least one of the inner face pane of the first and second glass panes (12 and/or 22), and at least a pyrolytic TCO-based coating may be provided on at least one surface of the at least one glass sheet forming the laminated assembly, for improving the emissivity performances.

Within the laminate assembly, the at least one glass sheet preferably has a thickness, Zs, equal to or greater than 0.5 mm (Zs $\geq$ 0.5 mm). The thickness is measured in the direction normal to the plane, P. The at least one polymer interlayer is a transparent or translucent polymer interlayer comprising a material selected from the group consisting ethylene vinyl acetate (EVA), polyisobutylene (PIB), polyvinyl butyral (PVB), polyurethane (PU), polyvinyl chlorides (PVC), polyesters, copolyesters, assembly polyacetals, cyclo olefin polymers (COP), ionomer and/or an ultraviolet activated adhesive and others known in the art of manufacturing glass laminates. Blended materials using any compatible combination of these materials can be suitable, as well.

Reinforced acoustic insulation with acoustic laminated glass are also compatible with the present concept to improve the performances of the window or door. In such case, the polymer interlayer comprises at least one additional acoustic material inserted between two polyvinyl butyral films. Glass panes with electrochromic, thermochromic, photochromic or photovoltaic elements are also compatible with the present invention.

## GLASS PANES

The first and second glass panes of the asymmetric VG of the present invention can be chosen among float clear, extra-clear or colored glass technologies. The term "glass" is herein understood to mean any type of glass or equivalent transparent material, such as a mineral glass or an organic glass. The mineral glasses used may be irrespectively one or more known types of glass such as soda-lime-silica, aluminosilicate or borosilicate, crystalline and polycrystalline glasses. The glass pane can be obtained by a floating process, a drawing process, a rolling process or any other process known to manufacture a glass pane starting from a molten glass composition. The glass panes can optionally be edge-ground. Edge grinding renders sharp edges into smooth edges which are much safer for people who could come in contact with the vacuum-insulating glazing, in particular with the edge of the glazing. Preferably, the glass pane according to the invention is a pane of soda-lime-silica glass, aluminosilicate glass or borosilicate glass. More preferably and for reasons of lower production costs, the glass pane according to the invention is a pane of soda-lime-silica glass.

Preferably, the composition for the first and second glass panes of the asymmetric VIG of the invention comprises the following components in weight percentage, expressed with respect to the total weight of glass (Comp. A). More preferably, the glass composition (Comp. B) is a soda-lime-silicate-type glass with a base glass matrix of the composition comprising the following components in weight percentage, expressed with respect to the total weight of glass.

|  | Comp. A | Comp. B |
|---|---|---|
| SiO2 | 40 - 78% | 60 - 78 wt% |
| Al2O3 | 0 - 18% | 0 - 8 wt%, pref 0 - 6 wt% |
| B2O3 | 0 - 18% | 0 - 4 wt%, pref 0 - 1 wt% |
| Na2O | 0 - 20% | 5 - 20 wt%, pref 10 - 20 wt% |
| CaO | 0 - 15% | 0 - 15 wt%, pref 5 - 15 wt% |
| MgO | 0 - 10% | 0 - 10 wt%, pref 0 - 8 wt% |
| K2O | 0 - 10% | 0 - 10 wt% |
| BaO | 0 - 5% | 0 - 5 wt%, pref 0 - 1 wt%. |

Other preferred glass compositions for the first and second glass panes of the asymmetric VIG of the invention,

comprises the following components in weight percentage, expressed with respect to the total weight of glass:

| Comp. C | Comp. D | Comp. E |
|---|---|---|
| $65 \leq SiO_2 \leq 78$ wt% | $60 \leq SiO_2 \leq 78$ % | $65 \leq SiO_2 \leq 78$ wt% |
| $5 \leq Na_2O \leq 20$ wt% | $5 \leq Na_2O \leq 20$ % | $5 \leq Na_2O \leq 20$ wt% |
| $0 \leq K_2O < 5$ wt% | $0.9 < K_2O \leq 12$ % | $1 \leq K_2O < 8$ wt% |
| $1 \leq Al_2O_3 < 6$ wt%, pref $3 < Al_2O_3 \leq 5$ % | $4.9 \leq Al_2O_3 \leq 8$ % | $1 \leq Al_2O_3 < 6$ wt% |
| $0 \leq CaO < 4.5$ wt% | $0.4 < CaO < 2$ % | $2 \leq CaO < 10$ wt% |
| $4 \leq MgO \leq 12$ wt% | $4 < MgO \leq 12$ % | $0 \leq MgO \leq 8$ wt% |
| $(MgO/(MgO+CaO)) \geq 0.5$, pref $0.88 \leq [MgO/(MgO+CaO)] < 1$. | | $K_2O/(K_2O+Na_2O)$ : 0.1 - 0.7. |

In particular, examples of base glass matrixes for the composition according to the invention are described in published in PCT patent applications WO2015/150207A1, WO2015/150403A1, WO2016/091672 A1, WO2016/169823A1 and WO2018/001965 A1.

The glass panes can be of the same dimensions or of different dimensions and form thereby a stepped VIG. In a preferred embodiment of the present invention, the first and the second glass panes comprise first and second peripheral edges, respectively and wherein the first peripheral edges are recessed from the second peripheral edges or wherein the second peripheral edges are recessed from the first peripheral edges. This configuration allows to reinforce the strength of the hermetically bonding seal.

In a preferred embodiment of the present invention and for higher mechanical resistance, the first glass and/or the second glass pane can be a pre-stressed glass. By pre-stressed glass, it means a heat strengthened glass, a thermally toughened safety glass, or a chemically strengthened glass.

Heat strengthened glass is heat treated using a method of controlled heating and cooling which places the outer glass surfaces under compression and the inner glass surface under tension. This heat treatment method delivers a glass with a bending strength greater than annealed glass but less than thermally toughened safety glass. Thermally toughened safety glass is heat treated using a method of controlled heating and cooling which puts the outer glass surface under compression and the inner glass surface under tension. Such stresses cause the glass, when impacted, to break into small granular particles instead of splintering into jagged shards. The granular particles are less likely to injure occupants or damage objects. The chemical strengthening of a glass article is a heat induced ion-exchange, involving replacement of smaller alkali sodium ions in the surface layer of glass by larger ions, for example alkali potassium ions. Increased surface compression stress occurs in the glass as the larger ions "wedge" into the small sites formerly occupied by the sodium ions. Such a chemical treatment is generally carried out by immerging the glass in an ion-exchange molten bath containing one or more molten salt(s) of the larger ions, with a precise control of temperature and time. Aluminosilicate-type glass compositions, such as for example those from the products range DragonTrail® from Asahi Glass Co. or those from the products range Gorilla® from Corning Inc., are also known to be very efficient for chemical tempering.

## SPACERS

As depicted in **Figure 1 to 4,** the vacuum-insulated glazing unit of the present invention comprises a plurality of discrete spacers (3), also referred to as pillars, sandwiched between the first and second glass panes (1, 2) so as to maintain the internal volume, V. As per invention, the discrete spacers are positioned between the first and second glass panes, maintaining a distance between the first and the second glass panes and forming an array having a pitch, $\lambda$, comprised between 10 mm and 100 mm (10 mm $\leq \lambda \leq$ 100 mm). By pitch, it is meant the interval between the discrete spacers. In a preferred embodiment, the pitch is comprised between 20 mm and 80 mm (20 mm $\leq \lambda \leq$ 80 mm), more preferably between 20 mm and 50 mm (20 mm $\leq \lambda \leq$ 50 mm). The array within the present invention is typically a regular array based on an equilateral triangular, square or hexagonal scheme, preferably a square scheme.

The discrete spacers can have different shapes, such as cylindrical, spherical, filiform, hour-glass shaped, C-shaped, cruciform, prismatic shape... It is preferred to use small pillars, i.e. pillars having in general a contact surface to the glass pane, defined by its external circumference, equal to or lower than 5 mm$^2$, preferably equal to or lower than 3 mm$^2$, more preferably equal to or lower than 1 mm$^2$. These values may offer a good mechanical resistance whilst being aesthetically discrete. The discrete spacers are typically made of a material having a strength endurable against pressure applied from the surfaces of the glass panes, capable of withstanding high-temperature process such as burning and baking, and hardly emitting gas after the glass panel is manufactured. Such a material is preferably a hard metal material, quartz glass or a ceramic material, in particular, a metal material such as iron, tungsten, nickel, chrome, titanium, molybdenum, carbon steel, chrome steel, nickel steel, stainless steel, nickel-chromium steel, manganese steel, chromium-manganese steel, chromium-molybdenum steel, silicon steel, nichrome, duralumin or the like, or a ceramic material such as corundum, alumina, mullite, magnesia, yttria, aluminum nitride, silicon nitride or the like.

## HERMETICALLY BONDING SEAL

As shown in **Figures 1 to 4,** the internal volume, V, delimited between the glass panes (1, 2) of the vacuum-insulated glazing (10) of the present invention is closed with a hermetically bonding seal (4) placed on the periphery of the glass panes around said internal space. The said hermetically bonding seal is impermeable and hard. Such as used here and unless otherwise indicated, the term "impermeable" is understood to mean impermeable to air or any other gas present in the atmosphere.

Various hermetically bonding seal technologies exist. A first type of seal (the most widespread) is a seal based on a solder glass for which the melting point is lower than that of the glass of the glass panels of the glazing unit. The use of this type of seal limits the choice of low-E layers to those that are not degraded by the thermal cycle required to implement the solder glass, i.e. to those that are able to withstand a temperature possibly as high as 250° C. In addition, since this type of solder-glass-based seal is only very slightly deformable, it does not allow the effects of differential expansion between the interior-side glass panel of the glazing unit and the exterior-side glass panel of the glazing unit when said panels are subjected to large temperature differences to be absorbed. Quite substantial stresses are therefore generated at the periphery of the glazing unit and may lead to breakage of the glass panels of the glazing unit.

A second type of seal comprises a metal seal, for example a metal strip of a small thickness (<500 $\mu$m) soldered to the periphery of the glazing unit by way of a tie underlayer covered at least partially with a layer of a solderable material such as a soft tin-alloy solder. One substantial advantage of this second type of seal relative to the first type of seal is that it is able to partially deform in order to partially absorb the differential expansion created between the two glass panels. There are various types of tie underlayers on the glass panel.

Patent application WO 2011/061208 A1 describes one example embodiment of a peripheral impermeable seal of the second type for a vacuum-insulated glazing unit. In this embodiment, the seal is a metal strip, for example made of copper, that is soldered by means of a solderable material to an adhesion band provided on the periphery of the glass panes.

## INTERNAL VOLUME

A vacuum of absolute pressure less than 0.1 mbar, preferably less than 0.01mbar is created, within the internal volume, V, defined by the first and second glass panes and the set of discrete spacers and closed by the hermetically bonding seal within the asymmetric VIG of the present invention.

The internal volume of the asymmetric VIG of the present invention, can comprise a gas, for example, but not exclusively, air, dry air, argon (Ar), krypton (Kr), xenon (Xe), sulfur hexafluoride (SF 6), carbon dioxide or a combination thereof. The transfer of energy through an insulating panel having this conventional structure is decreased, because of the presence of the gas in the internal volume, relative to a single glass pane.

The internal volume may also be pumped of any gas, creating therefore a vacuum glazing unit. Energy transfer through a vacuum-insulated insulating glazing unit is greatly decreased by the vacuum. To generate the vacuum in the internal space of the glazing unit, a hollow glass tube bringing the internal space into communication with the exterior is generally provided on the main face of one of the glass panes. Thus, the partial vacuum is generated in the internal space by pumping out gases present in the internal space by virtue of a pump connected to the exterior end of the glass tube.

To maintain for the duration a given vacuum level in a vacuum-insulated glazing unit, a getter may be used in the glazing panel. Specifically, the internal surfaces of the glass panes making up the glazing panel may release over time gases absorbed beforehand in the glass, thereby increasing the internal pressure in the vacuum-insulated glazing panel and thus decreasing the vacuum performance. Generally, such a getter consists of alloys of zirconium, vanadium, iron, cobalt, aluminium, etc., and is deposited in the form of a thin layer (a few microns in thickness) or in the form of a block placed between the glass panes of the glazing panel so as not to be seen (for example hidden by an exterior enamel or by a portion of the peripheral impermeable seal). The getter forms, on its surface, a passivation layer at room temperature, and must therefore be heated in order to make the passivation layer disappear and thus activate its alloy gettering properties. The getter is said to be "heat activated".

| Ref.# | Feature |
|---|---|
| 10 | Vacuum-insulated glazing unit |
| 1 | First glass pane |
| 12 | Inner pane face of the first glass pane |
| 13 | Outer pane face of the first glass pane |
| 2 | Second glass pane |
| 22 | Inner pane face of the second glass pane |
| 23 | Outer pane face of the second glass pane |
| 3 | Discrete spacers |
| 4 | Hermetically bonding seal |
| 5 | Pyrolytic TCO-based coating |
| V | Internal volume |

**Claims**

1. A vacuum insulating glazing unit (10) extending along a plane, P, defined by a longitudinal axis, X, and a vertical axis, Z, and comprising:

   a. a first glass pane (1) having an inner pane face (12) and an outer pane face (13) and having a thickness Z1, and
   b. a second glass pane (2) having an inner pane face (22) and an outer pane face (23) and having a thickness, Z2, wherein the thicknesses are measured in the direction normal to the plane, P ;
   c. a set of discrete spacers (3) positioned between the first and second glass panes, maintaining a distance between the first and the second glass panes;
   d. a hermetically bonding seal (4) sealing the distance between the first and second glass panes over a perimeter thereof;
   e. an internal volume, V, defined by the first and second glass panes and the set of discrete spacers and closed by the hermetically bonding seal and wherein there is a vacuum of absolute pressure of less than 0.1 mbar, and wherein the inner pane faces of the first and second glass panes face the internal volume, V;
   **characterized in that** a thickness ratio, Z1/Z2, of the thickness of the first glass pane, Z1, to the thickness of the second glass pane, Z2, is equal to or greater than 1.10 (Z1 / Z2 $\geq$ 1.10); and
   **in that** at least one of the inner pane faces (12 and/or 22) of the first and second glass panes (1, 2) is provided with a pyrolytic transparent conductive oxide-based coating.

2. A vacuum insulating glazing unit according to claim 1, wherein at least one the outer pane faces (13 and/or 23) of the first and second glass panes is provided with a pyrolytic transparent conductive oxide-based coating.

3. A vacuum-insulating glazing unit according to any of the preceding claims, wherein at least two of the inner pane faces (12 and/or 22) and/or outer pane faces (13 and/or 23) of the first and second glass panes are provided with a pyrolytic transparent conductive oxide-based coating.

4. A vacuum insulating glazing unit according to any one of the preceding claims, wherein the pyrolytic transparent conductive oxide-based coating comprises a layer of doped tin oxide.

5. A vacuum insulating glazing unit according to claim 4, wherein the layer of doped tin oxide is doped with fluorine (SnO2:F) or with antimony (SnO2:Sb).

6. A vacuum insulating glazing unit according to any one of the claim 4 or 5, wherein the layer of doped tin oxide has a roughness Rq of less than 12 nm (Rq < 12 nm), preferably less than 7 nm (Rq < 7 nm), more preferably less than 5 nm (Rq < 5 nm).

7. A vacuum insulating glazing unit according to any one of the preceding claims, wherein the thickness of the pyrolytic transparent conductive oxide-based coating, Zc, measured in the direction normal to the plane, P, is comprised between 100 nm and 800 nm (100 nm $\leq$ Zc $\leq$ 800 nm), preferably from 200 nm to 600 nm (200 nm $\leq$ Zc $\leq$ 600 nm), more preferably from 250 nm to 500 nm (250 nm $\leq$ Zc $\leq$ 500 nm).

8. A vacuum insulating glazing unit according to any one of the preceding claims, wherein an iridescence suppressing film is comprised between the at least one of the inner pane faces (12 and/or 22) of the first and second glass panes (1, 2) and said pyrolytic transparent conductive oxide-based coating.

9. A vacuum insulating glazing unit according to claim 8, wherein the iridescence suppressing film comprises at least one layer having a refractive index at a wavelength of 550 nm comprised between 1.7 and 2.5 and/or at least one layer having a refractive index at a wavelength of 550 nm comprised between 1.4 and 1.68.

10. A vacuum insulating glazing unit according to any one of the preceding claims, wherein the pyrolytic transparent conductive oxide-based coating is selected to provide an emissivity, E, of at most 0.20 (E $\leq$ 0.20), preferably at most 0.15 (E $\leq$ 0.15), more preferably at most 0.12 (E $\leq$ 0.12) when provided on a face of a clear glass having a thickness of 4 mm.

11. A vacuum insulating glazing unit according to any one of the preceding claims, wherein the thickness ratio between the thickness of the first glass pane, Z1, the thickness of the second glass pane, Z2, is equal to orgreaterthan 1.30 (Z1/Z2$\geq$1.30), preferably equal to or greater than 1.55 (Z1/Z2$\geq$1.55), more preferably comprised between 1.60 and 6.00 (1.60 $\leq$ Z1/Z2 $\leq$ 6.00), even more preferably between 2.00 and 4.00 (2.00 $\leq$ Z1/Z2 $\leq$ 4.00).

12. A vacuum insulating glazing unit according to any one of the preceding claims, wherein at least one of the outer pane faces (13 and/or23) of the first and second glass panes is laminated to at least one glass sheet by at least one polymer interlayer forming a laminated assembly.

13. A vacuum insulating glazing unit according to any one of the preceding claims, wherein at least one of the outer pane faces (13 and/or 23) of the first and second glass is coupled to a third glass pane along the periphery of the vacuum insulating glazing unit via a peripheral spacer bar creating in insulating cavity sealed by a peripheral edge seal.

14. A partition defining an exterior space and an interior space, said partition comprising an opening being closed by a vacuum insulating glazing unit according to any of the preceding claims, wherein the first glass pane is facing the exterior space.

15. Use of a vacuum insulated glazing unit according to any one of claims 1 to 13, to close the opening of a partition defining an exterior space and an interior space, wherein the first glass pane is facing the exterior space.

**Patentansprüche**

1. Vakuumisolierte Verglasungseinheit (10), die sich entlang einer Ebene, P, erstreckt, die durch eine Längsachse, X, und eine vertikale Achse, Z, definiert ist und Folgendes umfasst:

   a. eine erste Glasscheibe (1) mit einer Scheibeninnenseite (12) und einer Scheibenaußenseite (13) und mit einer Dicke Z1 und
   b. eine zweite Glasscheibe (2) mit einer Scheibeninnenseite (22) und einer Scheibenaußenseite (23) und mit einer Dicke, Z2, wobei die Dicken in der Richtung senkrecht zu der Ebene, P, gemessen werden;
   c. einen Satz diskreter Abstandshalter (3), die zwischen der ersten und der zweiten Glasscheibe positioniert sind, wobei sie einen Abstand zwischen der ersten und der zweiten Glasscheibe erhalten;
   d. eine hermetische Klebedichtung (4), die den Abstand zwischen der ersten und der zweiten Glasscheibe über ihren Umfang dichtet;
   e. ein Innenvolumen, V, das durch die erste und die zweite Glasscheibe und den Satz diskreter Abstandshalter definiert ist und durch die hermetische Klebedichtung geschlossen ist, und wobei es ein Vakuum mit einem absoluten Druck von weniger als 0,1 mbar gibt und

      wobei die Scheibeninnenseiten der ersten und der zweiten Glasscheibe dem Innenvolumen, V, zugewandt sind;

**dadurch gekennzeichnet, dass** ein Dickenverhältnis, Z1/Z2, der Dicke der ersten Glasscheibe, Z1, zu der Dicke der zweiten Glasscheibe, Z2, größer oder gleich 1,10 ist (Z1/Z2 ≥ 1,10); und dadurch, dass mindestens eine der Scheibeninnenseiten (12 und/oder 22) der ersten und der zweiten Glasscheibe (1, 2) mit einer pyrolytischen transparenten leitenden Oxid-basierten Beschichtung versehen ist.

2. Vakuumisolierte Verglasungseinheit nach Anspruch 1, wobei mindestens eine der Scheibenaußenseiten (13 und/oder 23) der ersten und der zweiten Glasscheibe mit einer pyrolytischen transparenten leitenden Oxid-basierten Beschichtung versehen ist.

3. Vakuumisolierte Verglasungseinheit nach einem der vorhergehenden Ansprüche, wobei mindestens zwei der Scheibeninnenseiten (12 und/oder 22) und/oder Scheibenaußenseiten (13 und/oder 23) der ersten und der zweiten Glasscheibe mit einer pyrolytischen transparenten leitenden Oxid-basierten Beschichtung versehen sind.

4. Vakuumisolierte Verglasungseinheit nach einem der vorhergehenden Ansprüche, wobei die pyrolytische transparente leitende Oxid-basierte Beschichtung eine Schicht aus dotiertem Zinnoxid umfasst.

5. Vakuumisolierte Verglasungseinheit nach Anspruch 4, wobei die Schicht aus dotiertem Zinnoxid mit Fluor (SnO2:F) oder mit Antimon(oxid) (SnO2:Sb) dotiert ist.

6. Vakuumisolierte Verglasungseinheit nach einem der Ansprüche 4 oder 5, wobei die Schicht aus dotiertem Zinnoxid eine Rauigkeit Rq von weniger als 12 nm (Rq < 12 nm), vorzugsweise von weniger als 7 nm (Rq < 7 nm), besonders bevorzugt von weniger als 5 nm (Rq < 5 nm) aufweist.

7. Vakuumisolierte Verglasungseinheit nach einem der vorhergehenden Ansprüche, wobei die Dicke der pyrolytischen transparenten leitenden Oxid-basierten Beschichtung, Zc, gemessen in der Richtung senkrecht zu der Ebene, P, zwischen 100 nm und 800 nm (100 nm ≤ Zc ≤ 800 nm), vorzugsweise zwischen 200 nm und 600 nm (200 nm ≤ Zc ≤ 600 nm), besonders bevorzugt zwischen 250 nm und 500 nm (250 nm ≤ Zc ≤ 500 nm) umfasst.

8. Vakuumisolierte Verglasungseinheit nach einem der vorhergehenden Ansprüche, wobei ein Iridisieren unterdrückender Film zwischen der mindestens einen der Scheibeninnenseiten (12 und/oder 22) der ersten und der zweiten Glasscheibe (1, 2) und der pyrolytischen transparenten leitenden Oxid-basierten Beschichtung enthalten ist.

9. Vakuumisolierte Verglasungseinheit nach Anspruch 8, wobei der Iridisieren unterdrückende Film mindestens eine Schicht mit einem Brechungsindex bei einer Wellenlänge von 550 nm enthält, der zwischen 1,7 und 2,5 liegt, und/oder mindestens eine Schicht mit einem Brechungsindex bei einer Wellenlänge von 550 nm zwischen 1,4 und 1,68 enthält.

10. Vakuumisolierte Verglasungseinheit nach einem der vorhergehenden Ansprüche, wobei die pyrolytische transparente leitende Oxid-basierte Beschichtung ausgewählt wird, um eine Emissionsvermögen, E, von höchstens 0,20 (E ≤ 0,20), vorzugsweise von höchstens 0,15 (E ≤ 0,15), besonders bevorzugt von höchstens 0,12 (E ≤ 0,12) bereitzustellen, wenn sie auf einer Seite eines klaren Glases mit einer Dicke von 4 mm bereitgestellt ist.

11. Vakuumisolierte Verglasungseinheit nach einem der vorhergehenden Ansprüche, wobei das Dickenverhältnis zwischen der Dicke der ersten Glasscheibe, Z1, und der Dicke der zweiten Glasscheibe, Z2, größer oder gleich 1,30 (Z1/Z2 ≥ 1,30), vorzugsweise größer oder gleich 1,55 (Z1/Z2 ≥ 1,55), besonders bevorzugt zwischen 1,60 und 6,00 (1,60 ≤ Z1/Z2 ≤ 6,00), noch bevorzugter zwischen 2,00 und 4,00 (2,00 ≤ Z1/22 ≤ 4,00) ist.

12. Vakuumisolierte Verglasungseinheit nach einem der vorhergehenden Ansprüche, wobei mindestens eine der Scheibenaußenseiten (13 und/oder 23) der ersten und der zweiten Glasscheibe an mindestens eine Glasscheibe durch mindestens eine Polymer-Zwischenschicht laminiert ist, wobei eine laminierte Einheit ausbildet wird.

13. Vakuumisolierte Verglasungseinheit nach einem der vorhergehenden Ansprüche, wobei mindestens eine der Scheibenaußenseiten (13 und/oder 23) des ersten und des zweiten Glases mit einer dritten Glasscheibe entlang des Umfangs der vakuumisolierten Verglasungseinheit mit einer Umfangsabstandshalterstange verbunden ist, die einen isolierenden Hohlraum erzeugt, der durch eine Umfangsranddichtung gedichtet ist.

14. Trennwand, die einen Außenraum und einen Innenraum definiert, wobei die Trennwand eine Öffnung umfasst, die durch eine vakuumisolierte Verglasungseinheit nach einem der vorhergehenden Ansprüche verschlossen ist, wobei die erste Glasscheibe dem Außenraum zugewandt ist.

**15.** Verwenden einer vakuumisolierten Verglasungseinheit nach einem der Ansprüche 1 bis 13, um die Öffnung einer Trennwand zu verschließen, die einen Außenraum und einen Innenraum definiert, wobei die erste Glasscheibe dem Außenraum zugewandt ist.

**Revendications**

**1.** Unité de vitrage isolant sous vide (10) s'étendant le long d'un plan, P, défini par un axe longitudinal, X, et un axe vertical, Z, et comprenant :

a. un premier carreau de verre (1) ayant une face interne de carreau (12) et une face externe de carreau (13) et ayant une épaisseur, Z1, et

b. un deuxième carreau de verre (2) ayant une face interne de carreau (22) et une face externe de carreau (23) et ayant une épaisseur, Z2, les épaisseurs étant mesurées dans la direction perpendiculaire au plan, P ;

c. un ensemble d'espaceurs discrets (3) positionnés entre les premier et deuxième carreaux de verre, maintenant une distance entre les premier et deuxième carreaux de verre ;

d. un joint d'étanchéité à assemblage hermétique (4) scellant la distance entre les premier et deuxième carreaux de verre sur un périmètre de ceux-ci ;

e. un volume interne, V, défini par les premier et deuxième carreaux de verre et l'ensemble d'espaceurs discrets et fermé par le joint d'étanchéité à assemblage hermétique et dans lequel il y a un vide de pression absolue inférieure à 0,1 mbar, et

dans laquelle les faces internes de carreau des premier et deuxième carreaux de verre font face au volume interne, V ;

**caractérisée en ce qu'**un rapport d'épaisseur, Z1/Z2, entre l'épaisseur du premier carreau de verre, Z1, et l'épaisseur du deuxième carreau de verre, Z2, est égal ou supérieur à 1,10 (Z1/Z2 ≥ 1,10) ; et

**en ce qu'**au moins une des faces internes de carreau (12 et/ou 22) des premier et deuxième carreaux de verre (1, 2) est pourvue d'un revêtement pyrolytique à base d'oxyde conducteur transparent.

**2.** Unité de vitrage isolant sous vide selon la revendication 1, dans laquelle au moins une des faces externes de carreau (13 et/ou 23) des premier et deuxième carreaux de verre est pourvue d'un revêtement pyrolytique à base d'oxyde conducteur transparent.

**3.** Unité de vitrage isolant sous vide selon l'une quelconque des revendications précédentes, dans laquelle au moins deux des faces internes de carreau (12 et/ou 22) et/ou faces externes de carreau (13 et/ou 23) des premier et deuxième carreaux de verre sont pourvues d'un revêtement pyrolytique à base d'oxyde conducteur transparent.

**4.** Unité de vitrage isolant sous vide selon l'une quelconque des revendications précédentes, dans laquelle le revêtement pyrolytique à base d'oxyde conducteur transparent comprend une couche d'oxyde d'étain dopé.

**5.** Unité de vitrage isolant sous vide selon la revendication 4, dans laquelle la couche d'oxyde d'étain dopé est dopée avec du fluor ($SnO_2$:F) ou avec de l'antimoine ($SnO_2$:Sb).

**6.** Unité de vitrage isolant sous vide selon l'une quelconque des revendications 4 et 5, dans laquelle la couche d'oxyde d'étain dopé a une rugosité Rq de moins de 12 nm (Rq < 12 nm), de préférence moins de 7 nm (Rq < 7 nm), mieux encore moins de 5 nm (Rq < 5 nm).

**7.** Unité de vitrage isolant sous vide selon l'une quelconque des revendications précédentes, dans laquelle l'épaisseur du revêtement pyrolytique à base d'oxyde conducteur transparent, Zc, mesurée dans la direction perpendiculaire au plan, P, est comprise entre 100 nm et 800 nm (100 nm ≤ Zc ≤ 800 nm), de préférence entre 200 nm et 600 nm (200 nm ≤ Zc ≤ 600 nm), mieux encore entre 250 nm et 500 nm (250 nm ≤ Zc ≤ 500 nm).

**8.** Unité de vitrage isolant sous vide selon l'une quelconque des revendications précédentes, dans laquelle un film supprimant l'iridescence est compris entre l'au moins une des faces internes de carreau (12 et/ou 22) des premier et deuxième carreaux de verre (1, 2) et ledit revêtement pyrolytique à base d'oxyde conducteur transparent.

**9.** Unité de vitrage isolant sous vide selon la revendication 8, dans laquelle le film supprimant l'iridescence comprend au moins une couche ayant un indice de réfraction à une longueur d'onde de 550 nm compris entre 1,7 et 2,5 et/ou au moins une couche ayant un indice de réfraction à une longueur d'onde de 550 nm compris entre 1,4 et 1,68.

**10.** Unité de vitrage isolant sous vide selon l'une quelconque des revendications précédentes, dans laquelle le revêtement pyrolytique à base d'oxyde conducteur transparent est sélectionné pour fournir une émissivité, E, au maximum de 0,20 ($E \leq 0,20$), de préférence au maximum de 0,15 ($E \leq 0,15$), mieux encore au maximum de 0,12 ($E \leq 0,12$), lorsqu'il est disposé sur une face d'un verre transparent ayant une épaisseur de 4 mm.

**11.** Unité de vitrage isolant sous vide selon l'une quelconque des revendications précédentes, dans laquelle le rapport d'épaisseur entre l'épaisseur du premier carreau de verre, Z1, et l'épaisseur du deuxième carreau de verre, Z2, est égal ou supérieur à 1,30 ($Z1/Z2 \geq 1,30$), de préférence égal ou supérieur à 1,55 ($Z1/Z2 \geq 1,55$), mieux compris entre 1,60 et 6,00 ($1,60 \leq Z1/Z2 \leq 6,00$), mieux encore entre 2,00 et 4,00 ($2,00 \leq Z1/Z2 \leq 4,00$).

**12.** Unité de vitrage isolant sous vide selon l'une quelconque des revendications précédentes, dans laquelle au moins une des faces externes de carreau (13 et/ou 23) des premier et deuxième carreaux de verre est stratifiée avec au moins une feuille de verre par au moins une couche intercalaire de polymère formant un ensemble stratifié.

**13.** Unité de vitrage isolant sous vide selon l'une quelconque des revendications précédentes, dans laquelle au moins une des faces externes de carreau (13 et/ou 23) du premier et du deuxième verre est couplée à un troisième carreau de verre le long de la périphérie de l'unité de vitrage isolant sous vide par le biais d'une barre d'espacement périphérique, créant une cavité isolante scellée par un joint d'étanchéité de bord périphérique.

**14.** Cloison définissant un espace extérieur et un espace intérieur, ladite cloison comprenant une ouverture qui est fermée par une unité de vitrage isolant sous vide selon l'une quelconque des revendications précédentes, dans laquelle le premier carreau de verre fait face à l'espace extérieur.

**15.** Utilisation d'une unité de vitrage isolant sous vide selon l'une quelconque des revendications 1 à 13 pour fermer l'ouverture d'une cloison définissant un espace extérieur et un espace intérieur, dans laquelle le premier carreau de verre fait face à l'espace extérieur.

Figure 1

EP 3 794 201 B1

Figure 2

Figure 3

EP 3 794 201 B1

Exterior

Interior

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001316137 B
- JP 2001316138 B
- US 20150354264 A
- WO 2016063007 A
- EP 1630344 A
- WO 2015150207 A1
- WO 2015150403 A1
- WO 2016091672 A1
- WO 2016169823 A1
- WO 2018001965 A1
- WO 2011061208 A1